# EUROPÄISCHE PATENTANMELDUNG

(11) **EP 0 814 489 A2**
(43) Veröffentlichungstag der Anmeldung: **29.12.1997**
(21) Anmeldenummer: 97110025.0
(22) Anmeldetag: 19.06.1997
(51) Int. Cl.: H01H 13/70, G09F 9/00

(54) **Anzeige bedien Tableau**

(30) Priorität: 21.06.1996 DE 29610897 U
(71) Anmelder: Heiland, Bernd, Dr.-Ing., D-48231 Warendorf (DE)
(72) Erfinder: Heiland, Bernd, Dr.-Ing., D-48231 Warendorf (DE)
(74) Vertreter: Schulze Horn & Partner

(57) **Zusammenfassung**

Die Erfindung betrifft: ein Anzeige- / Bedien-Tableau (1), bestehend aus einem Gehäuse (11) mit transparenter Schutzscheibe (12) und einem dahinter angeordneten Lageplan oder Prozeßdiagramm oder Tabelle oder Foto oder beliebiger grafischer Darstellung (15), hinter dem ein flächiger Träger (14) zur Halterung von Anzeigeelementen (16) und / oder Bedienelementen (26) angeordnet ist.

Das neue Anzeige- / Bedien-Tableau (1) ist dadurch gekennzeichnet, daß der flächige Träger (14) und der Lageplan (15) aus leicht perforierbarem Material bestehen, durch welches die Anschlüsse der Anzeige- und / oder Bedienelemente (16; 26) hindurchsteckbar sind, und daß die Schutzscheibe (12) und der Lageplan (15) in einem zumindest der Höhe der Anzeige- / Bedienelemente (16; 26) entsprechendem Abstand voneinander angeordnet sind.

## Beschreibung

Anzeige-Tableaus werden eingesetzt zur übersichtlichen Anzeige z.B. von Zustands- und / oder Alarm-Meldungen. Hauptbestandteil eines solchen Tableaus ist die objektspezifisch gestaltete Frontplatte mit der meist topografischen Darstellung des Gebäudegrundrisses und den darin montierten und in Einzelanfertigung verdrahteten Anzeigeelementen. Der Herstellungsaufwand ist somit relativ hoch.

Aus dem Gebrauchsmuster G 9015845.8 ist ein Tableau bekannt, das durch seine Lochrasterplatte eine wesentliche Vereinfachung der individuellen Gestaltung ermöglicht. Einschränkend hierbei ist zuweilen jedoch das vorgegebene Raster, in denen die Anzeigeelemente positioniert werden können.

Es stellte sich daher die Aufgabe, ein Anzeige- / Bedien-Tableau zu schaffen, das eine rasterfreie Plazierung von Anzeige- und / oder Bedienelemente erlaubt und schnell und kostengünstig herstellbar ist.

Gelöst wurde die Aufgabe gemäß dem kennzeichnenden Teil des Anspruches 1.
In einem Gehäuse mit transparenter Schutzscheibe befindet sich ein flächiger Träger, auf dem ein Lageplan, ein Prozeßdiagramm, ein Foto, eine Tabelle oder eine beliebige grafische Darstellung aufgebracht ist, und durch welche die Anschlüsse der Anzeige- und / oder Bedienelemente hindurchsteckbar und rückseitig mit ansteckbaren Leitungen zu einem Anschlußfeld verdrahtbar sind.

Die Vorteile eines solchen Tableaus liegen insbesondere in der einfachen und zugleich kostengünstigen Vorfertigung, in der leichten und schnellen individuellen Gestaltung, in der rasterfreien Positionierung der Anzeige- und Bedienelemente sowie in der Möglichkeit einer leichten späteren Erweiterung bzw. Änderung des Anzeige- und Bedien-Tableaus.

Zur leichteren Handhabung des Tableaus während der objektspezifischen Ausgestaltung kann der flächige Träger eine Trägerplatte aus geschäumtem Isolierstoff sein, der in einem schwenkbar gelagerten Rahmen gefaßt ist. Die elektrischen Verbindungen zwischen den Anzeige- und Bedienelementen zu mindestens einem Anschlußfeld erfolgen mittels vorkonfektionierter flexibler Leitungen.

Zur besseren optischen Unterscheidung wesensverschiedener Meldungen innerhalb eines Tableaus können somit auch LED's unterschiedlicher Größe und Formgebung - z.B. sog. Symbol-LED's - beliebig eingesetzt werden.

Als Bedienelement dient vorzugsweise ein berührungslos betätigbarer Sensortaster, z.B. Infrarot-Reflex-Taster, kapazitiver Taster o.ä., der bei Annäherung eines Fingers durch die Frontscheibe hindurch aktivierbar ist.

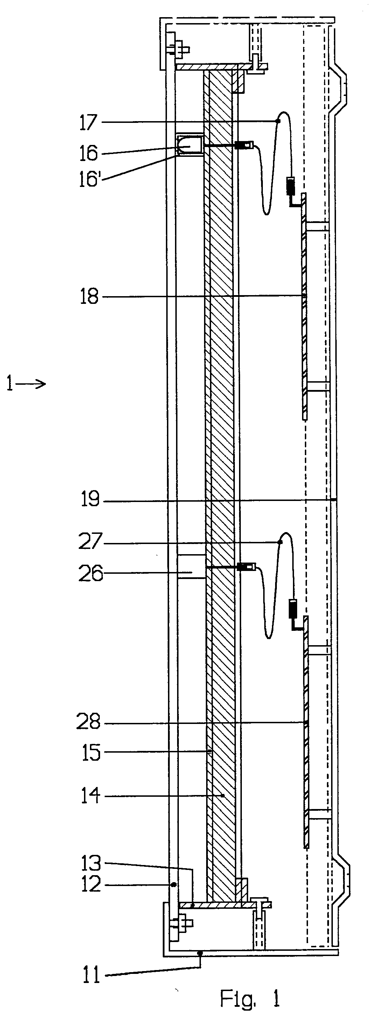

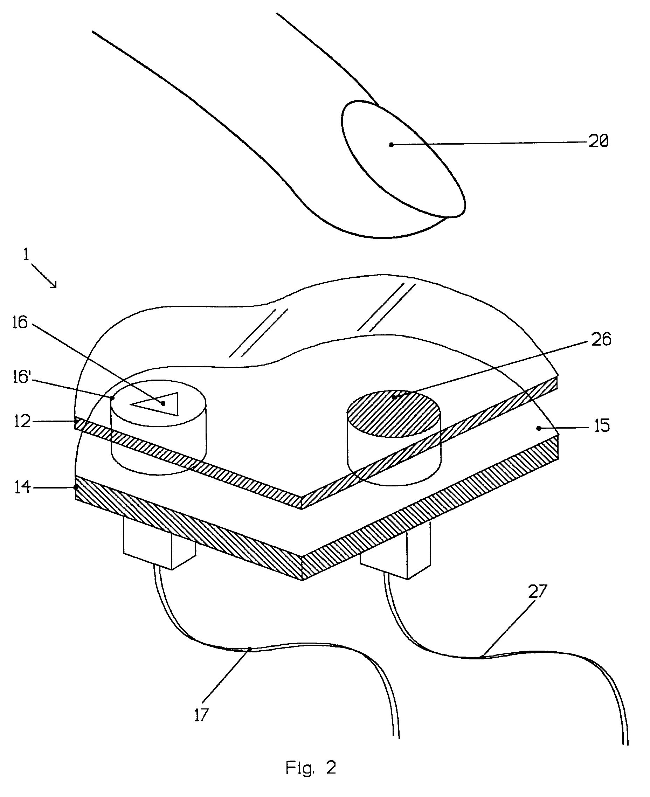

Im folgenden wird ein Ausführungsbeispiel der Erfindung anhand einer Zeichnung erläutert. Die beiden Figuren zeigen: Figur 1 eine bevorzugte Ausführung des Tableaus (1) im Schnitt und Figur 2 einen Ausschnitt in perspektivischer Draufsicht.

Gemäß Fig. 1 ist in dem Gehäuseoberteil 11 hinter einer transparenten Schutzscheibe 12 ein vorzugsweise schwenkbarer Rahmen 13 mit Trägerplatte 14 angeordnet, auf die der Lageplan 15 - z.B. als Fotokopie oder Plot - aufgeklebt werden kann. Die Trägerplatte 14 besteht vorzugsweise aus einem geschäumten Isoliermaterial, und erlaubt somit, daß die üblicherweise bedrahteten Anzeigeelemente 16 - z.B. LED's oder Stiftsockellampen - ohne jede mechanische Bearbeitung der gestalteten Trägerplatte an beliebiger Stelle durch den Lageplan 15 samt Trägerplatte 14 hindurchgesteckt werden können. Anstelle von Symbol-LED's können auch Standard-LED's mit einer aufgesetzten undurchsichtigen Kappe 16' und stirnseitiger Symbol-Lochung eingesetzt werden. Entsprechend können an beliebiger Stelle im Lageplan auch Bedienelemente 26 positioniert werden. Die auf der Rückseite der Trägerplatte (14) herausragenden Anschlüsse der Anzeige- bzw. Bedienelemente 16; 26 können nun einfach mittels sog. Jumperleitungen 17; 27 [d.h. vorkonfektionierter flexibler Leitungen mit Steckbuchsen] eine elektrische Verbindung zu mindestens einem Anschlußfeld 18; 28 erhalten, das z.B. als Verteilerplatine ausgeführt sein kann, die an der Gehäuserückwand 19 befestigt ist.

Die Fig. 2 zeigt einen Ausschnitt des Tableaus 1 in perspektivischer Draufsicht mit einer Symbol-LED 16 und einem Sensortaster 26, der bei hinreichender Annäherung eines Fingers 20 berührungslos durch die transparente Frontscheibe 12 hindurch auslösbar ist. Die Symbol-LED 16 und der Sensortaster 26 sind durch den Lageplan 15 mit Trägerplatte 14 hindurchgesteckt und rückseitig mittels Jumperleitungen 17; 27 elektrisch kontaktiert.

## Patentansprüche

1. Anzeige- / Bedien-Tableau (1), bestehend aus einem Gehäuse (11) mit transparenter Schutzscheibe (12) und einem dahinter angeordneten Lageplan oder Prozeßdiagramm oder Tabelle oder Foto oder beliebiger grafischer Darstellung (15), hinter dem ein flächiger Träger (14) zur Halterung von Anzeigeelementen (16) und / oder Bedienelementen (26) angeordnet ist
dadurch gekennzeichnet,
daß der flächige Träger (14) und der Lageplan (15) aus leicht perforierbarem Material bestehen, durch weiches die Anschlüsse der Anzeige- und / oder Bedienelemente (16; 26) hindurchsteckbar sind, und daß die Schutzscheibe (12) und der Lageplan (15) in einem zumindest der Höhe der Anzeige- / Bedienelemente (16; 26) entsprechendem Abstand voneinander angeordnet sind.

2. Tableau nach Anspruch 1, dadurch gekennzeichnet, daß der flächige Träger (14) und der Lageplan (15) aus werkzeuglos perforierbarem Material bestehen.

3. Tableau nach Anspruch 1 oder 2, dadurch gekennzeichnet, daß der flächige Träger (14) eine Trägerplatte ist.

4. Tableau nach einem der vorherigen Ansprüche, dadurch gekennzeichnet, daß der flächige Träger (14) in einem schwenkbar gelagerten Rahmen (13) gefaßt ist.

5. Tableau nach einem der vorherigen Ansprüche, dadurch gekennzeichnet, daß der flächige Träger (14) aus elektrisch nicht oder nur schlecht leitendem Material besteht.

6. Tableau nach Anspruch 5, dadurch gekennzeichnet, daß der flächige Träger (14) aus Schaumgummi oder aus PU-Schaum oder aus Balsaholz besteht.

7. Tableau nach einem der vorherigen Ansprüche, dadurch gekennzeichnet, daß die Anzeigeelemente (16) und / oder die Bedienelemente (26) mittels vorkonfektionierter Leitungen (17; 27) elektrisch mit mindestens einem Anschlußfeld (18; 28) verbunden werden.

8. Tableau nach einem der vorherigen Ansprüche, dadurch gekennzeichnet, daß das Anschlußfeld (18; 28) als Verteilerplatine ausgeführt ist, die vorzugsweise an der Gehäuserückwand (19) befestigt ist.

9. Tableau nach einem der vorherigen Ansprüche, dadurch gekennzeichnet, daß die Anzeigeelemente (16) entweder sogenannte Symbol-LED's oder Standard-LED's mit aufgesetzten Symbolkappen (16') sind.
